# EUROPEAN PATENT APPLICATION

(11) **EP 4 763 545 A1**
(43) Date of publication of application: **24.06.2026**
(21) Application number: 25224286.2
(22) Date of filing: 17.12.2025
(51) Int. Cl.: B60G 3/01, B60G 17/005, B60G 11/27

(54) **VEHICLE SUSPENSION WITH CLEARANCE SHIFTING**

(30) Priority: 20.12.2024 GB 202418913
(71) Applicant: Agco Do Brasil Soluções Agrícolas Ltda, São Paulo, 13213-105 (BR)
(72) Inventor: Pedrollo Soliman, Marcos, Canoas (BR)
(74) Representative: AGCO Intellectual Property Department

(57) **Abstract**

A support assembly for supporting a vehicle chassis on a wheel of the vehicle, the support assembly being configured to act as a suspension element of the vehicle through a pneumatic spring when a suspension lock is in a locked position and an axle lock is in an unlocked position, and the support assembly being configured to shift the clearance of the vehicle's chassis between a low clearance condition and a high clearance condition, the shifting comprising alternately changing the axle lock and the suspension lock between a locked position and an unlocked position while alternately inflating and deflating the pneumatic spring.

## Description

### TECHNICAL FIELD

Embodiments of the present invention relate generally to mobile machines, such as self-propelled agricultural machines and similar vehicles. More particularly, embodiments of the present invention relate to mobile machines with adjustable-height chassis.

### BACKGROUND

Some agricultural vehicles are configured to be operated in fields among row crops. Application machines such as self-propelled sprayers, for example, may have wheels configured to pass between crop rows and a spray boom that extends outwardly from the vehicle to spray the crop as the machine travels through the field. In order to avoid damaging the crops as the vehicle moves through the field, each of the wheels has a width selected to travel between the rows, and a track width -the lateral distance between the wheels -selected to match row spacing so that the wheels are properly positioned between crop rows. Furthermore, the vehicle should have sufficient ground clearance (the distance between the vehicle body and the surface over which it moves) to clear the crops.

While a standard height agricultural vehicle may be used to process short crops, such as early-stage corn or the like, difficulties arise when processing taller crops, such as mature corn, that are taller than the ground clearance of a standard vehicle. For such crops, high clearance vehicles may be used. While high clearance vehicles provide sufficient clearance to pass over the top of taller crops, they suffer from various limitations. For example, high clearance vehicles, such as those that provide a crop clearance of seventy inches or more, may have an overall height that exceeds highway height restrictions, thereby making the transport of such vehicles to and from the field difficult. For example, public highways often restrict the height of a load to twelve feet or less which may be exceeded when a high clearance vehicle is placed on a transport trailer. Thus, measures may need to be taken to lower the vehicle to an acceptable transport height, such as deflating the tires or entirely removing the wheels.

In addition, while high clearance vehicles may be desirable for use on tall crops, they are not as effective in processing shorter crops without added complexity in the boom lifting mechanism to accommodate the range of motion required to place the boom at the proper height above the crop when spraying at the various crop heights. Some systems have been developed to increase the ground clearance of an existing vehicle. But these systems are complicated and require the removal of existing vehicle equipment and/or the addition of new equipment.

The above section provides background information related to the present disclosure which is not necessarily prior art.

### BRIEF SUMMARY

In certain embodiments of the present invention, the agricultural vehicle is generally an agricultural applicator, which is a known type of equipment or machinery used to apply agricultural inputs such as fertilizers, pesticides, herbicides, and sometimes seeds or water to crops or soil. The term agricultural machine can refer to sprayers, fertilizer applicators, planters and seeders, irrigation equipment, boom applicators and any other vehicle that would benefit from the advantages of the various embodiments of the support assemblies disclosed herein, such as chassis height adjustment and independent suspension.

In an aspect of the invention there is provided a support assembly for supporting a vehicle chassis on a wheel of an agricultural vehicle, the support assembly being pivotably connected to the vehicle chassis through an axle member. The support assembly comprises a first strut bar and a second strut bar slidingly coupled with the axle member. A wheel attachment and a suspension member are slidingly coupled with the support assembly through the strut bars. A pneumatic spring is operably interposed between the suspension member and the axle member. At least axle lock is moveably interposable between a position coupled to the axle member and at least one of the strut bars. At least one suspension lock is moveably interposable between a position coupled to the suspension member and at least one of the strut bars. The support assembly is configured to act as a suspension element of the vehicle through the pneumatic spring when the suspension lock is in a locked position and the axle lock is in an unlocked position and to shift the clearance of the chassis between a low clearance condition and a high clearance condition. The shifting comprises alternately changing the axle lock and the suspension lock between a locked position and an unlocked position while alternately inflating and deflating the pneumatic spring.

In a further aspect of the invention, the support assembly is configured to act as a suspension element of the vehicle through the pneumatic spring when the suspension lock is in a locked position and the axle lock is in an unlocked position.

In another aspect of the invention, the support assembly is configured to shift the clearance of the chassis between a low clearance condition and a high clearance condition. The shifting comprises alternately changing the axle lock and the suspension lock between a locked position and an unlocked position while alternately inflating and deflating the pneumatic spring.

According to an aspect of the invention, the shifting of the clearance of the chassis between a low clearance condition and a high clearance condition comprises locking the suspension lock and unlocking the axle lock, inflating the pneumatic spring, locking the axle lock and unlocking the suspension lock, deflating the pneumatic spring, locking the suspension lock and unlocking the axle lock, and inflating the pneumatic spring.

A further aspect of the invention provides that the shifting of the clearance of the chassis between a low clearance condition and a high clearance condition comprises at least one intermediate clearance condition between the low clearance condition and the high clearance condition.

In another aspect of the invention, the locking and unlocking of the suspension lock and the axle lock and the inflating and deflating of the pneumatic spring are manual operations executed by an operator of the vehicle.

In yet another aspect of the invention, the locking and unlocking of the suspension lock and the axle lock are automatic operations executed by a controller of the agricultural vehicle; and the inflating and deflating of the pneumatic spring are semi-automatic or fully automatic operations commanded by the controller of the agricultural vehicle in dependency on the locked and/or unlocked conditions of the suspension lock and the axle lock.

In a further aspect of the invention, the controller of the support assembly is communicatively connected to at least one controller of the vehicle and generates at least one signal for instructing a user interface of the support assembly to present information about the status of the shifting.

Another aspect of the invention includes a method for shifting the clearance of a vehicle's chassis between a low clearance condition and a high clearance condition, the chassis comprising a support assembly for supporting the vehicle chassis on a wheel of the vehicle, the support assembly being pivotably connected to the vehicle chassis through an axle member. The support assembly comprises a first strut bar and a second strut bar slidingly coupled with the axle member. A wheel attachment and a suspension member are slidingly coupled with the support assembly through the strut bars. A pneumatic spring is operably interposed between a position coupled to the axle member and the suspension member. At least one suspension lock is moveably interposable between a position coupled to the suspension member and at least one of the strut bars. The support assembly is configured to act as a suspension element of the vehicle through the pneumatic spring when the suspension lock is in a locked position and the axle lock is in an unlocked position and to shift the clearance of the chassis between a low clearance condition and a high clearance condition. The shifting method comprises alternately changing the axle lock and the suspension lock between a locked position and an unlocked position while alternately inflating and deflating the pneumatic spring.

Within the scope of this application, it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

Embodiments will now be described, by way of example only, with reference to the accompanying drawings, in which:
**FIG. 1** is a perspective view of an agricultural vehicle illustrating the support assemblies for supporting the vehicle's chassis on wheels of the vehicle;
**FIG. 2** is a perspective view of the agricultural vehicle of **FIG. 1** with two of the wheels omitted to more fully illustrate support assemblies interposed between the wheels and the chassis;
**FIG. 3** is a perspective view illustrating certain features of a cabin of the agricultural vehicle of **FIG. 1** including user interface elements allowing a user to control certain functions of the agricultural vehicle;
**FIGS. 4a****-b** are block diagrams of various exemplary embodiments of a controller of the support assembly of the agricultural vehicle of **FIG. 1****;**
**FIG. 5a** is a perspective view of one of the support assemblies;
**FIG. 5b** is a perspective view of the support assembly of **FIG. 5a** in a partially pivoted position;
**FIG. 6a** is a side view of one of the support assemblies of **FIG. 5a** before the shifting between a low clearance condition and a high clearance condition, where the suspension lock is locked and the axle lock is unlocked;
**FIG. 6b** is a side view of one of the support assemblies of **FIG. 5a** during the shifting between a low clearance condition and a high clearance condition, where the suspension lock is locked and the axle lock is unlocked while the pneumatic spring is inflated;
**FIG. 6c** is a side view of one of the support assemblies of **FIG. 5a** during the shifting between a low clearance condition and a high clearance condition, where the suspension lock is unlocked and the axle lock is locked while the pneumatic spring remains inflated;
**FIG. 6d** is a side view of one of the support assemblies of **FIG. 5a** during the shifting between a low clearance condition and a high clearance condition, where the suspension lock is unlocked and the axle lock is locked while the pneumatic spring is deflated;
**FIG. 6e** is a side view of one of the support assemblies of **FIG. 5a** during the shifting between a low clearance condition and a high clearance condition, where the suspension lock is locked and the axle lock is unlocked while the pneumatic spring remains deflated; and
**FIG. 6f** is a side view of one of the support assemblies of **FIG. 5a** after the shifting between a low clearance condition and a high clearance condition, where the suspension lock remains locked and the axle lock remains unlocked while the pneumatic spring is inflated.

### DETAILED DESCRIPTION

The following detailed description of embodiments references the accompanying drawings. The embodiments are intended to describe aspects in sufficient detail to enable those skilled in the art to practice the invention. Other embodiments can be utilized, and changes can be made without departing from the scope of the claims. The following detailed description is, therefore, not to be taken in a limiting sense. The scope of the present invention is defined only by the appended claims, along with the full scope of equivalents to which such claims are entitled.

In this description, references to "one embodiment", "an embodiment", or "embodiments" mean that the feature or features being referred to are included in at least one embodiment of the technology. Separate references to "one embodiment", "an embodiment", or "embodiments" in this description do not necessarily refer to the same embodiment and are also not mutually exclusive unless so stated and/or except as will be readily apparent to those skilled in the art from the description. For example, a feature, structure, act, etcetera described in one embodiment may also be included in other embodiments, but is not necessarily included. Thus, the present technology can include a variety of combinations and/or integrations of the embodiments described herein.

The particular size and shape of the various components may vary substantially from one embodiment to another. Therefore, while dimensions and proportions of various components are set forth herein, it will be understood that such information is provided by way of example and does not limit the scope of the claims.

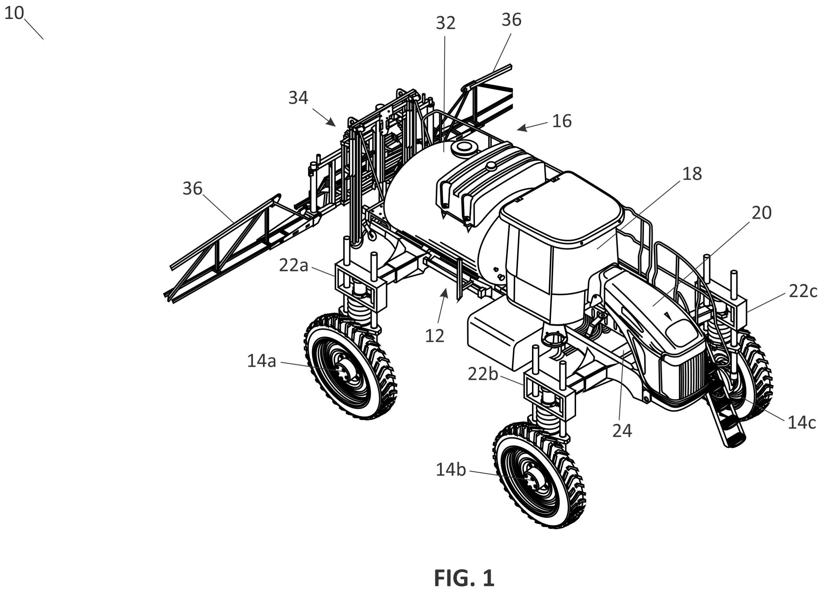

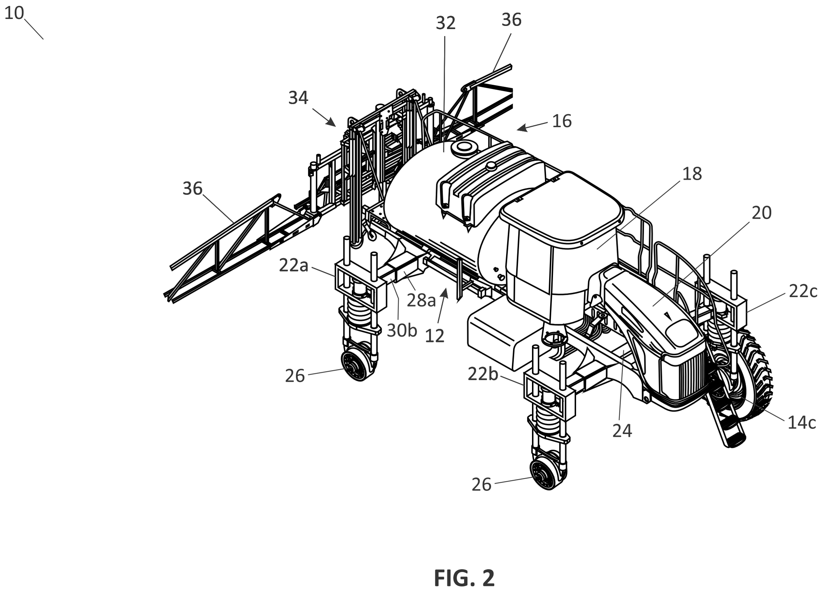

Turning now to the drawing figures, and initially **FIGS. 1-4****,** an exemplary agricultural vehicle or applicator **10** is illustrated. The agricultural vehicle **10** broadly includes a chassis 12, a plurality of wheels **14** or other ground engaging elements supporting the chassis **12** above a ground surface, an application system **16,** an operator cabin **18,** and an engine compartment **20.** A plurality of support assemblies **22** interposed between the wheels **14** and the chassis **12** support the chassis **12** on the wheels **14** and provide suspension, height adjustment and/or steering functions, as discussed in greater detail below.

Certain components of the agricultural vehicle **10** have been omitted from the figures for simplicity of illustration and to show certain features of the agricultural vehicle **10** that would otherwise be concealed. The engine, for example, has been omitted to illustrate components of the agricultural vehicle **10** frame, including portions of the front axle **24.** Certain hydraulic lines, such as hydraulic lines running to and from the assemblies **22,** are also omitted. The agricultural vehicle **10** is illustrated and discussed herein as an exemplary machine with which the support assemblies **22** may be used. It will be appreciated by those skilled in the art that the support assemblies **22** may be used with other machines including other types of applicators or other vehicles or mobile machines that would benefit from the advantages of the various embodiments of the support assemblies disclosed herein, such as chassis height adjustment and independent suspension.

The agricultural vehicle **10** includes a pair of front wheels **14b, 14c** and a pair of rear wheels **14a, 14d** of the appropriate size and shape to allow the agricultural vehicle **10** to travel among row crops with minimal crop disturbance. A used herein, a "wheel" includes an inner, rigid wheel and an outer, flexible tire mounted on the wheel unless otherwise specified. The particular size, shape and configuration of the wheels **14** may vary substantially from one embodiment to another. In some embodiments, the vehicle may have ground engaging elements other than wheels, such as tracks. Hereinafter, reference will be made to a "wheel" or "wheels" with the understanding that the illustrated wheels **14** may be replaced with other types of ground engaging elements.

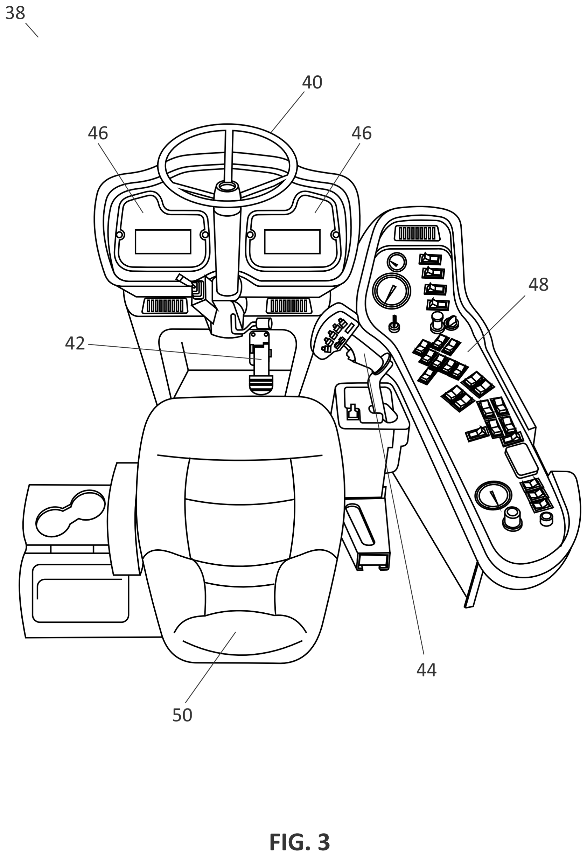

One or more drive motors **26** may be associated with one or more of the wheels **14** for driving rotation of the wheel or wheels relative to the chassis **12** to thereby propel the agricultural vehicle **10** in forward and reverse directions. In the illustrated embodiment, a separate hydraulic motor **26** is drivingly connected to each wheel **14** such that each of the wheels **14** may be driven independently to propel the agricultural vehicle **10.** Either two or all four of the wheels **14** may be steerable. In some embodiments, the steering functionality of some of the wheels **14** may be selectively enabled and disabled. By way of example, the front wheels **14b, 14c** may always be steerable while supplemental steering provided by the rear wheels **14a, 14d** may be selectively enabled and disabled. An operator may control the drive motors **26** and steering functions of the wheels **14,** including enabling and disabling the steering ability of certain of the wheels **14,** from one or more of the user interface elements of the cabin illustrated in **FIG. 3****.**

The agricultural vehicle **10** as shown includes mechanisms for adjusting the track width of the wheels **14** to accommodate, for example, different spacing needs for row crops. In the illustrated embodiment, the agricultural vehicle **10** includes telescoping axles with an outer axle **28** and an inner axle **30** associated with each wheel 14, wherein the inner axle **30** slidingly engages the outer axle **28** and allows the wheel **14** to shift laterally relative to the chassis **12.** A hydraulic piston or similar actuator may drive the inner axle **30** inwardly and outwardly to shift the position of the wheel **14.** The inner **30** and outer **28** axles form part of the chassis **12** and, in the illustrated embodiment, the outer axles **28** are rigidly connected to another portion of the chassis, such as one or more frame elements.

The application system **16** is supported on the chassis **12** and may be conventional in nature. In the illustrated embodiment, the application system **16** includes a liquid holding tank **32** and a delivery system **34** for applying a liquid from the holding tank **32** to a crop or field. The delivery system **34** includes a pair of booms **36** supporting hoses, pumps and spray nozzles or similar components for dispersing or otherwise applying the contents of the tank to a crop. Alternatively, the application system **16** may be configured to apply dry material to a field and therefore may include a hopper and a mechanism for dispersing particulate material from the hopper, such as a pneumatic spreader or one or more spinners.

The operator cabin **18** or "cab" is supported on the chassis **12** and positioned forward of the application system **16.** In other embodiments, the cabin **18** may be positioned behind a part of the application system **16** (e.g., the booms **36** may be at the front of the agricultural vehicle **10).** The cabin **18** presents a control environment **38** including a steering wheel **40,** one or more pedals **42,** a drive lever **44,** one or more electronic instrument panels **46,** and a control panel 48 including buttons, switches, levers, gauges and/or other user interface elements. The various components of the control environment **38** enable the operator to control the functions of the agricultural vehicle **10,** including driving and operating the application system **16.** The various user interface elements are positioned around and proximate a seat **50** for easy access by an operator during operation of the agricultural vehicle **10.** The control environment **38** may include a touchscreen display. One or both of the electronic instrument panels **46,** for example, may be or include a touchscreen, or a display terminal with a touchscreen may be mounted on or near the control panel **48.**

In some embodiments, the support assemblies **22** include one or more height adjustment components, such as pneumatic springs **106,** for raising and lowering the chassis **12** of the agricultural vehicle **10** through a sequence of inflating and deflating the pneumatic springs **106** with alternated locking and unlocking of locking means, such as suspension locks **121** and axle locks **120,** causing the shifting of the clearance of the chassis **12** between a low clearance condition and a high clearance condition and, in some embodiments, comprising at least one intermediate clearance condition between the low clearance condition and the high clearance condition. One or more of the support assemblies **22** or portions thereof may be selectively pivotable relative to the chassis **12** to thereby steer the agricultural vehicle **10.** Each of the support assemblies **22** may include one or more actuators for adjusting a height of the chassis, for steering the associated wheel, or both.

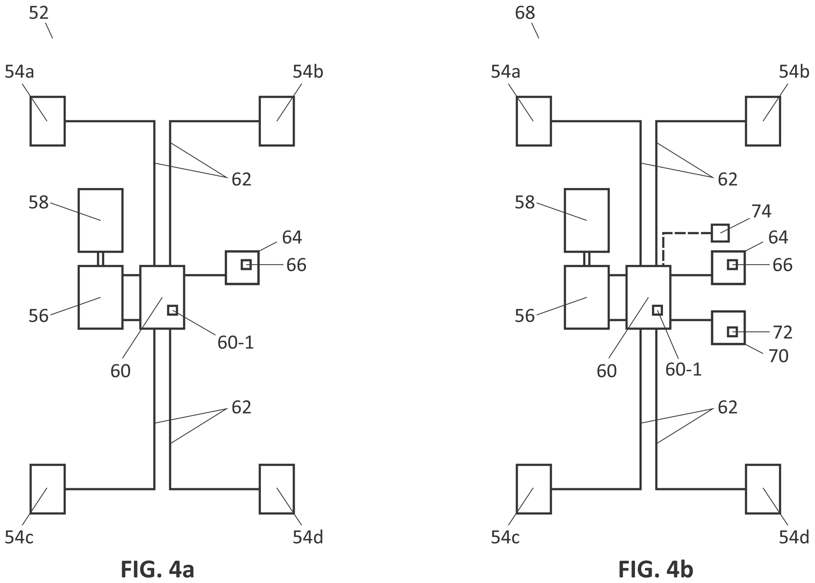

**FIGS. 4a and 4b** are block diagrams of various exemplary embodiments of a controller **70** of the support assembly of the agricultural vehicle of **FIG. 1****.**

**FIG. 4a** illustrates an exemplary pneumatic control system **52** for operating the pneumatic actuator sections **54** in which a centralized air pump or compressor **56,** driven by an internal combustion engine **58** or other power source, communicates pressurized air to a pneumatic controller **60** that regulates fluid flow between the pump **56** and the pneumatic actuator sections **54** associated with the support assemblies **22** via a plurality of pneumatic transfer lines **62.** The pneumatic controller **60** may include, for example, a pneumatic manifold or similar device.

Each of the pneumatic transfer lines **62** communicates pneumatic power between the pneumatic controller **60** and one or more pneumatic actuator sections **54** and the pneumatic springs **106** and, thus, may include one or more pneumatic pressure lines and one or more pneumatic return lines. Each of the pneumatic transfer lines may communicate pneumatic power to and from more than one pneumatic spring **106,** and each of the actuator sections **54** may include a group of actuators associated with each wheel **14** and/or support assembly **22.** It will be appreciated that the actuator sections **54** are exemplary in nature and that the various pneumatic actuators may not be grouped as described herein.

The system **52** includes a control interface **64** in communication with the pneumatic controller **60.** The control interface **64** may be part of a user interface that includes one or more physical or virtual user interface elements **66,** such as buttons, switches or dials, and is preferably part of the control environment **38** illustrated in **FIG. 3****.**

It will be appreciated that various different types of technology may be used to actuate the support assemblies **22.** Thus, while the various actuators are illustrated and described herein as pneumatic actuators, it will be understood that other types of actuators may be used in place of, or in connection with, the pneumatic actuators. By way of example, electromechanical actuators may be used in place of at least some of the pneumatic actuators illustrated and discussed herein.

It will also be appreciated that the locking and unlocking mechanism of the axle locks **120** and the suspension locks **121** can be a simple manually operatable mechanical device or an electromechanical device comprising a servomotor and/or a solenoid actuator and/or a pneumatic actuator or similar devices that can also be manually operated. In case the axle locks **120** and the suspension locks **121** are pneumatic locks, a similar exemplary pneumatic control system **52** would apply.

**FIG. 4b** illustrates another exemplary control system **68** that is identical to the system **52** but includes a computerized controller **70** with a control module **72** for controlling the pneumatic controller **60.** The system **68** may also include a wireless interface element **74** in wireless communication with the controller **60** for allowing a user to remotely control the actuator sections **54.** The wireless interface element **74** may be a dedicated device, such as a device similar to a conventional key fob used with cars and other vehicles, or a computing device such as smart phone, tablet computer, or wearable computing device programmed or configured for use with the system **68.** The wireless interface element **74** may be configured to communicate with the pneumatic controller **60** and/or the computerized controller **70** via shortrange wireless communications, such as Wi-Fi or Bluetooth, or via a communications network such as a cellular network.

The controller **70** may include one or more integrated circuits programmed or configured to control the pneumatic controller **60** to actuate the pneumatic springs **106** of the support assemblies **22** as described herein. By way of example, the controller **70** may include one or more general purpose microprocessors or microcontrollers, programmable logic devices, or application specific integrated circuits. The controller **70** may also include one or more discrete and/or analog circuit components operating in conjunction with the one or more integrated circuits, and may include or have access to one or more memory or storage elements operable to store executable instructions, data, or both. The control module **72** may be a hardware or software module specifically dedicated to enabling the controller **70** to control the pneumatic controller 60 as described herein.

In some embodiments, the pneumatic controller **60** may comprise a levelling valve **60-1,** as shown in **FIG. 4b****,** for inflating and deflating the pneumatic spring **106.** Such a valve maintains a consistent ride height of the chassis **12** of the agricultural vehicle **10** regardless of the load it carries, automatically adjusting the amount of air in the pneumatic springs **106.** This adjustment ensures that the chassis **12** remains at a constant height, improving stability and handling

The levelling valve **60-1** is directly linked to the pneumatic springs **106** of the agricultural vehicle **10,** and it may be possible to use one levelling valve **60-1** for all pneumatic springs 106 or even one levelling valve **60-1** for each pneumatic spring **106.** In a neutral position, when the chassis **12** is at the desired clearance, the levelling valve **60-1** remains closed, maintaining the current air pressure in the pneumatic springs **106.** During the shifting between a low clearance condition and a high clearance condition of the chassis **12,** the levelling valve **60-1** can be triggered by the operator and/or the controller **70** to either add air by opening an air intake port of the levelling valve **60-1,** allowing compressed air from the centralized air pump or compressor **56** or any similar onboard supply system to enter the pneumatic springs **106,** or to release air by opening an exhaust port of the levelling valve **60-1,** allowing excess air to escape from the pneumatic springs **106.**

It will also be appreciated that the locking and unlocking mechanism of the axle locks **120** and the suspension locks **121** can be a simple manually operatable mechanical device or an electromechanical device comprising a servomotor and/or a solenoid actuator and/or a pneumatic actuator or similar devices controlled by the controller **70.** In case the axle locks **120** and the suspension locks **121** are pneumatic locks, a similar exemplary pneumatic control system **68** would apply.

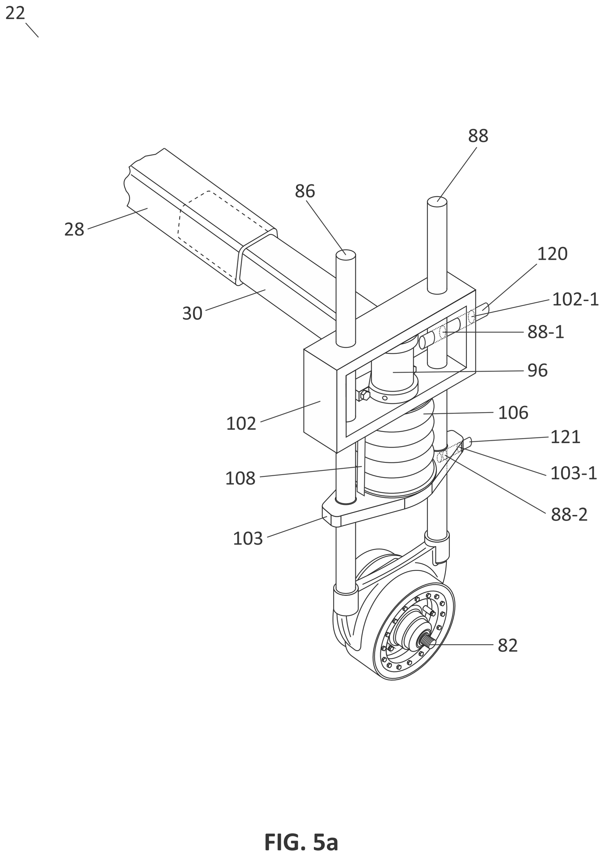

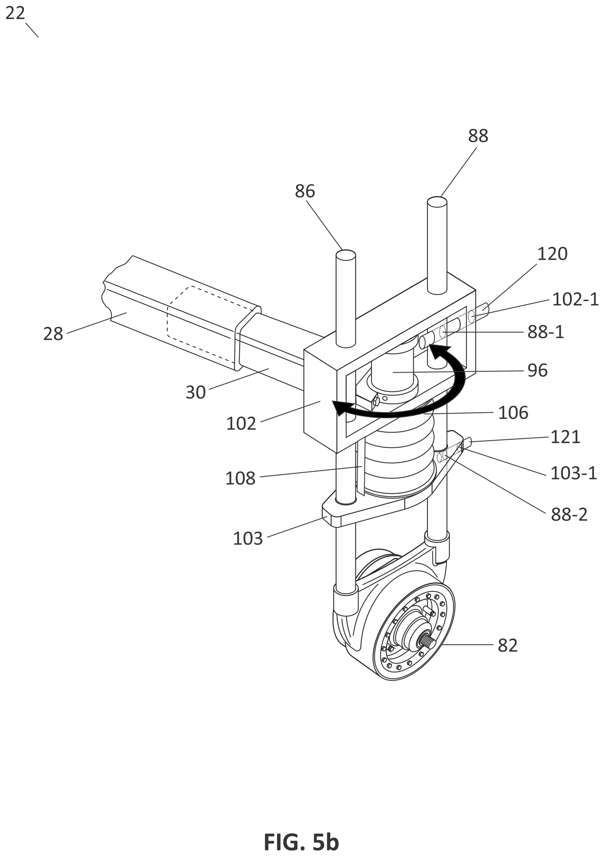

One of the support assemblies **22** is illustrated in greater detail in **FIGS. 5a- 5b****.** As mentioned above, the agricultural machine **10** includes a support assembly **22** interposed between each of the wheels **14** and the chassis **12.** Each support assembly **22** connects to a hub of one of the wheels **14** or any other ground engaging element and to one of the inner axles **30** of the chassis **12** such that the wheel **14** and the support assembly **22** shift laterally as a single unit relative to the chassis **12** when the inner axle **30** is shifted relative to the outer axle **28** to adjust the applicator's **10** track width.

The support assembly **22** is pivotably connected to the chassis **12** through the axle member **102,** the axle member **102** being pivotably connected to a pivot element **96** associated with the inner axle **30** of the chassis **12.**

Each of the support assemblies **22** comprises a first strut bar **86** and a second strut bar **88** slidingly coupled with the axle member **102,** allowing each of the support assemblies **22** to slide vertically, up or down, as well as a wheel attachment **82** and a suspension member **103** slidingly coupled with the support assembly **22** through the strut bars **86, 88.**

Each of the support assemblies **22** comprises a pneumatic spring **106** or a similar motion-regulating element operably interposed between and attached to the axle member **102** and to the suspension member **103,** the pneumatic spring **106** being attached to the suspension member **103** and to the axle member **102** in opposite sides of the pneumatic spring **106.** The pneumatic spring **106** uses trapped or compressed air or other fluid to regulate motion transfer between the chassis **12** and the wheel attachment **82.** The pneumatic spring **106** may contain air, water, nitrogen, antifreeze or other fluid and may be single, double, or triple convolute. A pair of flexible straps **108** may be positioned on opposite sides of the pneumatic spring **106** to limit extension of the pneumatic spring **106** and a bumper may be positioned inside or outside the pneumatic spring **106** to limit the pneumatic spring's **106** compression. It is to be noticed, that in some embodiments of the disclosure, the pneumatic spring **106** may also comprise an internal spring or other similar device to limit the pneumatic spring's **106** compression and/or to pull the pneumatic spring **106** back into a specific position and/or vertical size.

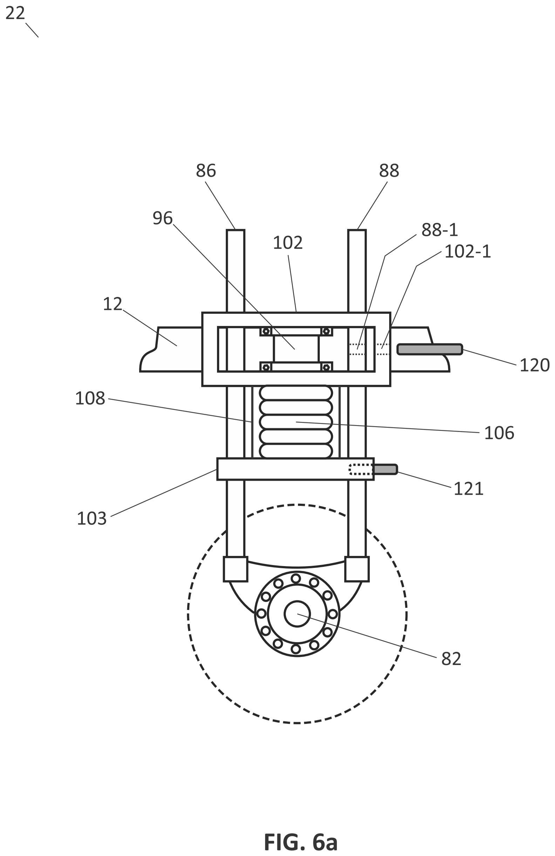

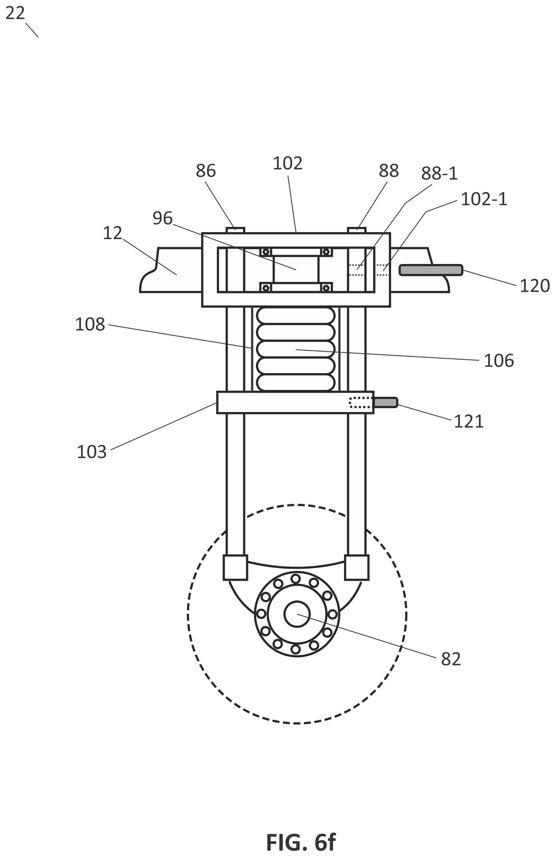

Furthermore, the support assembly **22** regulates motion transfer between the wheels **14** and the chassis **12** regardless of the operating position of the assemblies **22.** Thus, the support assembly **22** performs essentially the same suspension function regardless of whether the chassis **22** is in a low clearance condition (e.g., **FIG. 6a****),** a high clearance condition (e.g., **FIG. 6f****),** or somewhere in between.

The support assembly **22** further comprises at least one axle lock **120** moveably interposable between a position coupled to the axle member **102** and at least one of the strut bars **86, 88.** The axle lock **120** is moveable between an unlocked position and a locked position. The axle lock **120** can be any mechanical or electromechanical device comprising a pin or a piston that, in a locked position, penetrates at least one hole **102-1** in the axle member **102** and at least one hole **88-1** in at least one of the strut bars **86, 88,** locking the axle member **102** in relation to at least one of the strut bars **86, 88,** as shown in **FIGS. 5a-5b****.** The pin or piston of the axle lock **120** and the holes in the axle member **102** and in at least one of the strut bars **86, 88** are concentric. As already described, an axle lock **120** can be a simple manually operatable mechanical device comprising a pin and at least one locking element such as a split pin or a screw and a nut, or can be an electromechanical device comprising a servomotor and/or a solenoid actuator and/or a pneumatic actuator or similar devices controlled by the controller **70,** as well as a hydraulic driven locking system comprising a hydraulic element coupled to a pin, the hydraulic element being fluidly connected to the hydraulic system of the agricultural machine **10** and controlled by the controller **70.**

The support assembly **22** also comprises at least one suspension lock **121** moveably interposable between a position coupled to the suspension member **103** and at least one of the strut bars **86, 88.** The suspension lock **121** is moveable between an unlocked position and a locked position. The suspension lock **121** can be any mechanical or electromechanical device comprising a pin or a piston that, in a locked position, penetrates at least one hole **103-1** in the suspension member **103** and at least one hole **88-2** in at least one of the strut bars **86, 88,** locking the suspension member **103** in relation to at least one of the strut bars **86, 88,** as shown in **FIGS. 5a-5b****.** The pin or piston of the suspension lock **121** and the holes in the suspension member **103** and in at least one of the strut bars **86, 88** are concentric. A already described, a suspension lock **121** can be a simple manually operatable mechanical device comprising a pin and at least one locking element such as a split pin or a screw and a nut, or an electromechanical device comprising a servomotor and/or a solenoid valve and/or a pneumatic actuator or similar devices controlled by the controller **70,** as well as a hydraulic driven locking system comprising a hydraulic element coupled to a pin, the hydraulic element being fluidly connected to the hydraulic system of the agricultural machine **10** and controlled by the controller **70.**

It is to be noticed that **FIGS. 5a-5b** show both the axle lock **120** and the suspension lock **121** in their locked positions, for illustration purposes only since the axle lock **120** and the suspension lock **121,** as described herein, will be at different locking conditions, i.e., when the axle lock **120** is locked, the suspension lock **121** is unlocked and vice-versa.

When the suspension lock **121** is in its locked position, blocking the vertical movement of the suspension member **103,** and the axle lock **120** is in its unlocked position, as shown in **FIGS. 6a****,** allowing the axle member **102** to slide upwards and downwards, the support assembly **22** acts as a suspension element of the agricultural vehicle **10** through the pneumatic spring **106** independently from the pneumatic spring **106** being in an inflated or deflated state. The pneumatic spring **106,** together with the associated wheel 14, supports the weight of the agricultural vehicle **10** and also absorbs the kinetic and potential energy caused by the relative movement between the chassis **12** and the ground during the normal operation or travelling of the agricultural vehicle **10.** This condition of locked suspension lock **121** and unlocked axle lock **120,** as shown in **FIGS. 6a** (normal operation condition in low clearance condition) and **6f** (normal operation condition in high clearance condition), will be referred to as being the normal operation condition of the agricultural vehicle 10. In some embodiments of the disclosure, while the agricultural vehicle **10** is in a normal pneumatic operation condition, the spring **106** has the same vertical size in both low and high clearance condition.

Shifting the clearance of the chassis **12** between a low clearance condition and a high clearance condition comprises alternately changing the axle lock **120** and the suspension lock **121** between a locked position and an unlocked position while alternately inflating and deflating the pneumatic spring **106,** as it will be described in more detail below.

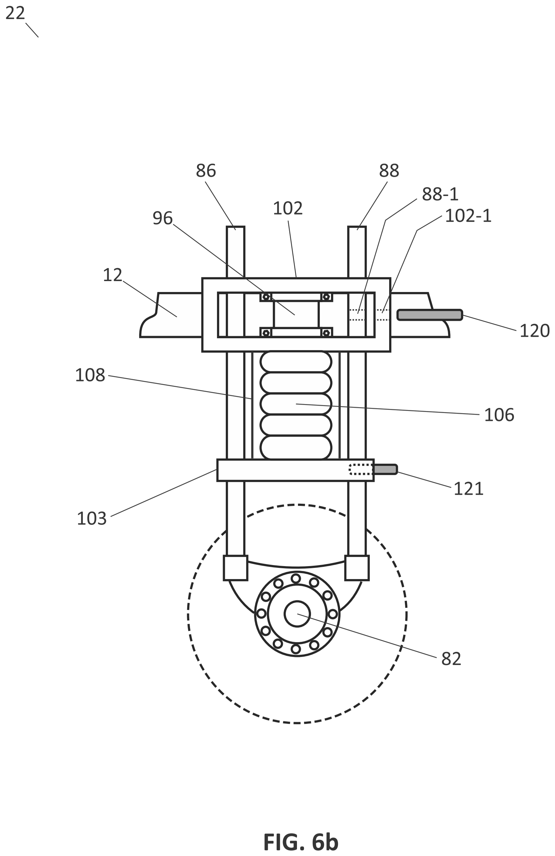

When the suspension lock **121** is in its locked position and the axle lock **120** is in its unlocked position, the agricultural vehicle **10** is in its low clearance condition. Inflating the pneumatic spring **106** will cause the chassis **12** to rise, forced by the expansion of the pneumatic spring **106,** as shown in **FIG. 6b****.** The vertical stroke of the pneumatic spring **106** can be controlled by the controller **70** or the operator and, of course, the maximum vertical stroke will be limited to the size and construction of the pneumatic spring 106 as well as to the technical specifications of the agricultural vehicle **10.**

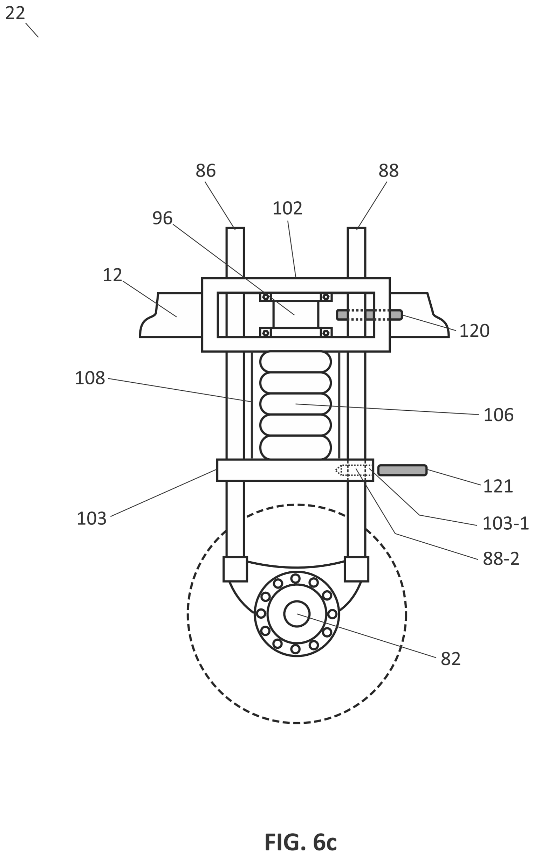

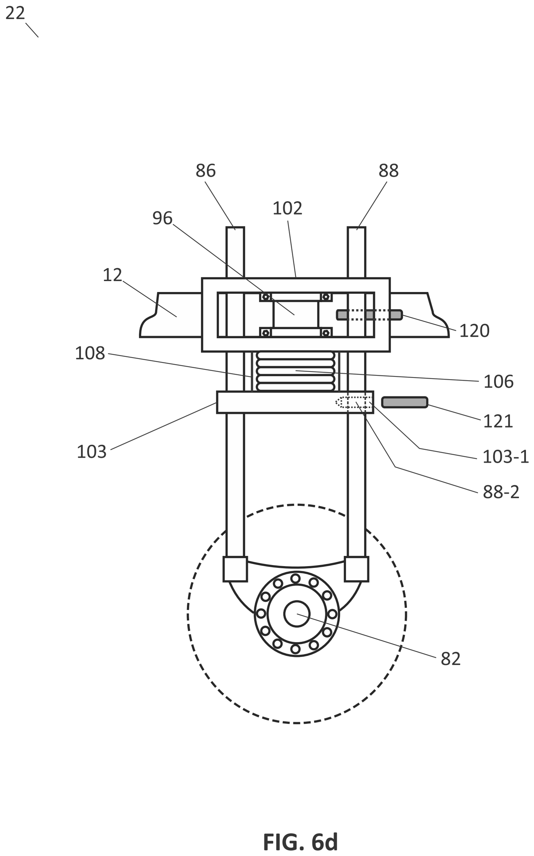

After inflating the pneumatic spring **106** to an upper limit, as shown in **FIG. 6c****,** locking the axle lock **120,** unlocking the suspension lock **121** and deflating the pneumatic spring **106** will cause the suspension member **103** to rise, pulled upward by a spring or similar device and/or by the deflation of the pneumatic spring **106,** as shown in **FIG. 6d****.**

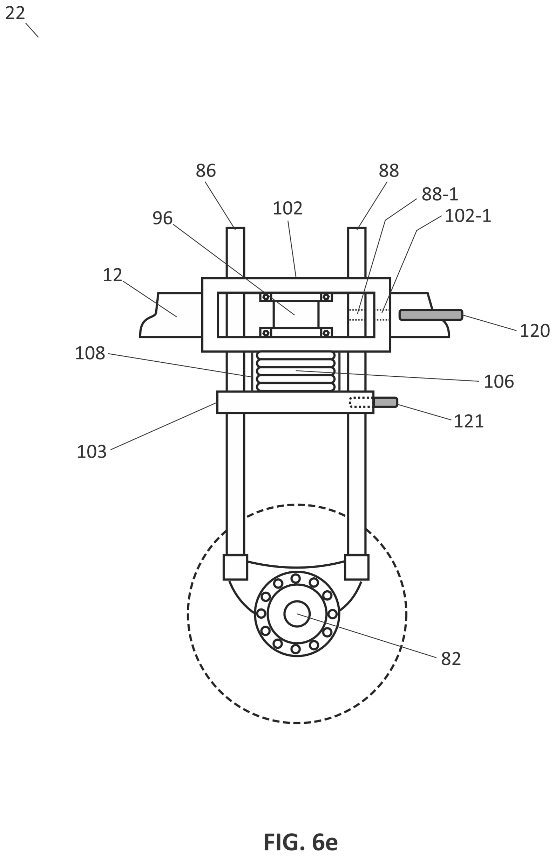

After deflating the pneumatic spring **106** as shown in **FIG. 6e****,** locking the suspension lock **121,** unlocking the axle lock **120** and inflating the pneumatic spring **106** will cause the chassis **12** to rise once again, forced by the expansion of the pneumatic spring **106,** as shown in **FIG. 6f****.** In this case, the vertical stroke of the pneumatic spring **106** can also be controlled by the controller **70** or the operator and, of course, the maximum vertical stroke will be limited to the size and construction of the pneumatic spring **106** as well as to the technical specifications of the agricultural vehicle **10.** This condition of inflated pneumatic spring **106,** locked suspension lock **121** and unlocked axle lock **120,** as shown in **FIG. 6f****,** will be referred to as being the high clearance condition of the agricultural vehicle **10.**

As already described, one or more leveling valves **60-1** may be used to control the inflating and deflating of the pneumatic springs **106** during the shifting between a low clearance condition and a high clearance condition of the chassis **12.** The use of leveling valves **60-1** is a robust and cost-effective way to automatically adjust and level the height of the pneumatic springs **106.**

In some embodiments, the shifting of the clearance of the chassis **12** between a low clearance condition and a high clearance condition may comprise at least one intermediate clearance condition between the low clearance condition and the high clearance condition.

It is also to be understood that, in some embodiments, the locking and unlocking of the suspension lock **121** and the axle lock **120** and the inflating and deflating of the pneumatic spring **106** are manual operations executed by an operator of the vehicle. For example, the suspension lock **121** and the axle lock **120** may be physically placed or removed by the operator, and the pneumatic spring **106** can be inflated individually in a manual and decentralized manner, for example, through a simple air pump or air compressor using air valves placed on each pneumatic spring 106.

In some embodiments, the locking and unlocking of the suspension lock **121** and the axle lock **120** are automatic operations executed by a controller **70** of the agricultural vehicle **10** and the inflating and deflating of the pneumatic spring **106** are semi-automatic or fully automatic operations commanded by the controller **70** of the agricultural vehicle **10** in dependency on the locked and/or unlocked conditions of the suspension lock **121** and the axle lock **120.**

A controller **70** of the agricultural machine **10** is a computer system or a processing circuit configured to control the support assembly **22,** comprising a central processing unit or CPU that carries out the instructions of a computer program, processing and executing arithmetic, logical operations and data input and output, the computer program being stored in a computer-readable medium with memory for data storage, connection to one or more communication and data networks and to one or more remote databases and/or an information storage and retrieval environment, local and/or centralized and/or decentralized and/or in the cloud, and also equipped with all the usual peripherals of the state of the art, being capable of exchanging information with the electronic and physical medium, interfaces, applications, mobile equipment, other memory devices, etc.

The controller **70** comprises at least one control unit and a human-machine interface (HMI) comprising information/instruction acquisition devices and information/instruction presentation devices and other devices and/or equipment connected to the agricultural machine **10** and to the support assemblies **22** to operate together and may be, in a group or separately, interconnected by one or more communication and data networks.

The controller **70** of the support assembly **22** is communicatively connected to at least one controller of the agricultural vehicle **10** and generates at least one signal for instructing a user interface of the support assembly **22** to present information about the status of the shifting.

The controller **70** may be part of a computing system or be divided into one or more modules of a processing circuit. The term "module," as used herein, refers to an application-specific integrated circuit (ASIC), an electronic circuit, a processor (shared, dedicated or group of processors) and a memory which executes one or more programs software or firmware. It further refers to a combinational logic circuit and/or other suitable components capable of providing the functionalities herein.

A "computer program," as used herein, is a program executable on a processor of the controller **70.**

A "processing circuit," as used herein, may include a processor such as a central processing unit (CPU), a microcontroller, a microprocessor, a field programmable gate array (FPGA), a graphics card or special hardware.

A "computer-readable memory," as used herein, is any memory or storage device, remote or local, volatile or non-volatile, transient or non-transitory (permanent), which stores information and instructions and, in particular, a computer-readable memory which stores instructions capable of executing a method for shifting the clearance of a vehicle's chassis **12** between a low clearance condition and a high clearance condition.

Some embodiments include a method for shifting the clearance of a vehicle's chassis **12** between a low clearance condition and a high clearance condition. As described above, the chassis **12** comprises a support assembly **22** for supporting the vehicle chassis **12** on a wheel **14** of the vehicle **10,** the support assembly **22** is pivotably connected to the vehicle chassis **12** through an axle member **102,** the support assembly **22** comprises a first strut bar **86** and a second strut bar **88** slidingly coupled with the axle member **102,** a wheel attachment **82** and a suspension member **103** are slidingly coupled with the support assembly through the strut bars, a pneumatic spring **106** is operably interposed between a position coupled to the axle member **102** and the suspension member **103,** at least one axle lock **120** is moveably interposable between a position coupled to the axle member **102** and at least one of the strut bars **86, 88,** and at least one suspension lock **121** is moveably interposable between the suspension member **103** and at least one of the strut bars **86, 88.** The shifting method comprises locking the suspension lock **121** and unlocking the axle lock **120,** inflating the pneumatic spring **106,** locking the axle lock **120** and unlocking the suspension lock **121,** deflating the pneumatic spring **106,** locking the suspension lock **121** and unlocking the axle lock **120,** and inflating the pneumatic spring **106.**

All references cited herein are incorporated herein in their entireties. If there is a conflict between definitions herein and in an incorporated reference, the definition herein shall control.

## Claims

1. A support assembly for supporting a vehicle chassis on a wheel of the vehicle, the support assembly being pivotably connected to the vehicle chassis through an axle member, the support assembly comprising:
a first strut bar and a second strut bar slidingly coupled with the axle member;
a wheel attachment and a suspension member slidingly coupled with the support assembly through the strut bars;
a pneumatic spring operably interposed between and attached to the suspension member and the axle member;
at least one axle lock moveably interposable between a position coupled to the axle member and at least one of the strut bars;
at least one suspension lock moveably interposable between a position coupled to the suspension member and at least one of the strut bars;
wherein the support assembly is configured to:
act as a suspension element of the vehicle through the pneumatic spring when the suspension lock is in a locked position and the axle lock is in an unlocked position; and
shift the clearance of the chassis between a low clearance condition and a high clearance condition, the shifting comprising alternately changing the axle lock and the suspension lock between a locked position and an unlocked position while alternately inflating and deflating the pneumatic spring.

2. The support assembly of claim 1, wherein the shifting comprises:
locking the suspension lock and unlocking the axle lock;
inflating the pneumatic spring;
locking the axle lock and unlocking the suspension lock;
deflating the pneumatic spring;
locking the suspension lock and unlocking the axle lock; and
inflating the pneumatic spring.

3. The support assembly of claim 1 or claim 2, wherein the shifting of the clearance of the chassis between a low clearance condition and a high clearance condition comprises at least one intermediate clearance condition between the low clearance condition and the high clearance condition.

4. The support assembly of any one of claim 1 to 3, wherein the locking and unlocking of the suspension and the axle locks and the inflating and deflating of the pneumatic spring are manual operations executed by an operator of the vehicle.

5. The support assembly of any one of claim 1 to 3, wherein the locking and unlocking of the suspension and the axle locks are automatic operations executed by a controller of the agricultural vehicle and the inflating and deflating of the pneumatic spring are semi-automatic or fully automatic operations commanded by the controller of the agricultural vehicle in dependency on the locked and/or unlocked conditions of the suspension and the axle locks.

6. The support assembly of claim 5, wherein the controller of the support assembly is communicatively connected to at least one controller of the vehicle and generates at least one signal for instructing a user interface of the support assembly to present information about the status of the shifting.

7. A method for shifting the clearance of a vehicle's chassis between a low clearance condition and a high clearance condition, the chassis comprising a support assembly for supporting the vehicle chassis on a wheel of the vehicle, the support assembly being pivotably connected to the vehicle chassis through an axle member, the support assembly comprising:
a first strut bar and a second strut bar slidingly coupled with the axle member;
a wheel attachment and a suspension member slidingly coupled with the support assembly through the strut bars;
a pneumatic spring operably interposed between a position coupled to the axle member and the suspension member;
at least one chassis lock moveably interposable between a position coupled to the axle member and at least one of the strut bars;
at least one suspension lock moveably interposable between the suspension member and at least one of the strut bars;
wherein the shifting method comprises:
locking the suspension lock and unlocking the axle lock;
inflating the pneumatic spring;
locking the axle lock and unlocking the suspension lock;
deflating the pneumatic spring;
locking the suspension lock and unlocking the axle lock; and
inflating the pneumatic spring.
